# EUROPÄISCHE PATENTSCHRIFT

(11) **EP 0 838 353 B1**
(45) Veröffentlichungstag und Bekanntmachung des Hinweises auf die Patenterteilung: **12.09.2001**
(21) Anmeldenummer: 97118415.5
(22) Anmeldetag: 23.10.1997
(51) Int. Cl.: B60C 19/08, B60C 11/18, B60C 11/00

(54) **Fahrzeugluftreifen**
Vehicle tyre
Bandage pneumatique pour véhicule

(30) Priorität: 26.10.1996 DE 19644538
(43) Veröffentlichungstag der Anmeldung: 29.04.1998
(73) Patentinhaber: Continental Aktiengesellschaft, 30165 Hannover (DE)
(72) Erfinder: Braatz, Martin, 30459 Hannover (DE); Geyer, Eugen, 30890 Barsinghausen (DE)

(56) Entgegenhaltungen:
- EP-A- 0 681 931
- EP-A- 0 718 127
- EP-A- 0 732 229
- EP-A- 0 798 142
- DE-A- 1 901 448

## Beschreibung

Die Erfindung betrifft einen Fahrzeugluftreifen mit einer Karkasse, die vom Zenitbereich des Reifens bis in die Wulstbereiche reicht, weiterhin mit einem Laufstreifen und einem zwischen Laufstreifen und Karkasse angeordneten gummierten Gürtelpaket.

Bei einem Fahrzeug besteht im allgemeinen das Problem, daß es während des Fahrbetriebes elektrisch aufgeladen wird. Eine ausreichende Ableitung der elektrostatischen Ladungen ist aber nur dann gegeben, wenn neben anderen externen Maßnahmen die Aufstandsfläche des Reifens ausreichend leitfähig ist und mit der Fahrbahn stetigen Kontakt hat. Wenn das nicht der Fall ist, können Entladungen eintreten, die z. B. vom Fahrer als unangenehm empfunden werden. Insbesondere bei kieselsäurehaltigen Laufflächen, die dem Reifen an sich gute Fahreigenschaften wie einen geringen Rollwiderstand und gute Naßrutscheigenschaften verleihen, ist deren niedrigere elektrische Leitfähigkeit eine mischungsbedingte nachteilige physikalische Eigenschaft.

Aus der EP 718 127 A1, die dem Oberbegriff des Anspruchs 1 entspricht, ist bekannt, eine leitfähige Gummimischung, die im Laufstreifen als "base" fungiert, bis an die mit der Fahrbahn in Berührung kommende Fläche des Laufstreifens reichen zu lassen. Es hat sich aber herausgestellt, daß bei der Herstellung der so aufgebauten Laufstreifen Schwierigkeiten auftraten, die sich auf die Qualität des vulkanisierten Reifens auswirkten. So werden die unvulkanisierten Laufstreifen in einem Mehrfach-Extruder hergestellt, der es ermöglicht, beide Kautschukmischungen (Cap und Base) in einem Verfahrensschritt herzustellen. Es ist ersichtlich, daß das Material der Cap-Kautschukmischung verdrängt werden muß, um Material der Base-Kautschukmischung durch die Cap-Kautschukmischung verlaufen zu lassen. Das verdrängte Cap-Kautschukmaterial führt zu Dickenschwankungen des Laufstreifens, was letztendlich im Fahrbetrieb des Reifens u. a. einen ungleichmäßigen Abrieb bedeuten kann. Des Weiteren besteht das Problem, daß während der Extrusion dieses Laufstreifens ein ungleichmäßiger Spannungsabbau in dem Polymer auftritt, der einen ungleichmäßigen Schrumpf zur Folge hat. Die Polymermatrix besitzt demzufolge Inhomogenitäten, die sich auf die Fahreigenschaften des Reifens auswirken. Es sind also nicht nur Probleme während des Extrusionsvorganges aufgetreten, sondern der in dem Dokument EP 718 127 A1 beschriebene Laufstreifenaufbau wirkte sich auch nachteilig auf die Gleichförmigkeit des fertigen Reifens aus.

Der vorliegenden Anmeldung liegt die Aufgabe zugrunde, einen Fahrzeugluftreifen, der eine ausreichende Leitfähigkeit aufweist, bereitzustellen, ohne Schwierigkeiten beim Extrudieren in Kauf zu nehmen und somit Fahrzeugluftreifen herzustellen, die eine gleichbleibend hohe Qualität aufweisen.

Gelöst wird diese Aufgabe erfindungsgemäß dadurch, daß die Gummierung des Gürtelpaketes einen spezifischen elektrischen Widerstand < 10⁸ Ω x cm aufweist, der Laufstreifen aus zumindest 3 Bereichen aufgebaut ist, wobei die mit der Fahrbahn in Berührung kommende Fläche des Laufstreifens zu über der Hälfte von einem Bereich A des Laufstreifens gebildet ist, dessen Gummimischung einen spezifischen elektrischen Widerstand > 10¹⁰ Ω x cm aufweist und die in radialer Richtung mindestens 40 % der gesamten Laufstreifendicke umfaßt, und die übrige mit der Fahrbahn in Berührung kommende Fläche, zumindest teilweise, von einem Bereich B, dessen Gummimischung einen spezifischen elektrischen Widerstand < 10⁸ Ω x cm aufweist, eingenommen ist, wobei sich der Bereich B bis zum gummierten Gürtelpaket erstreckt, und ein Bereich C des Laufstreifens, dessen Gummimischung sich unterhalb des Bereiches A des Laufstreifens erstreckt und den wesentlichen Raum zwischen diesem und dem Gürtelpaket ausfüllt und an beiden axialen Begrenzungen des Bereiches C zu den Seiten des Reifens mit zumindest einer weiteren Gummimischung in Kontakt steht, die einen spezifischen Widerstand < 10⁸ Ω x cm aufweist, wobei der Bereich B des Laufstreifens, bezogen auf den Reifenquerschnitt, zumindest auf einer Seite, einen Abstand D von 1 - 30 mm zum Bereich C des Laufstreifens aufweist, wobei der Zwischenraum mit der Gummimischung des Bereiches A des Laufstreifens ausgefüllt ist.

Durch die Bildung eines Zwischenraums zwischen dem Bereich B und dem Bereich C des Laufstreifens wird es möglich, daß während des Extrusionsvorganges die verdrängte Kautschukmischung des Bereiches A in diesen Zwischenraum fließen kann, so daß eine Dicken- und Formschwankung an der Oberfläche des unvulkanisierten Laufstreifens vermieden wird. Demzufolge werden Produktionsschwankungen bei der Herstellung des unvulkanisierten Laufstreifens ausgeschlossen, so daß die Qualität des Fahrzeugluftreifens stetig gewährleistet ist. Durch die erfindungsgemäße Laufstreifengestaltung wird ein exakter Reifenaufbau möglich, der z. B. Rundlaufschwankungen ausschließt. Gleichzeitig werden Fahrzeugluftreifen erzielt, die eine hervorragende Ableitfähigkeit aufweisen.

Es ist erfindungsgemäß möglich, den Abstand D zwischen den Bereichen B und C zu beiden Seiten des Bereiches B, bezogen auf den Reifenquerschnitt, zu wählen. Der Vorteil dieser Ausführungsvariante besteht darin, daß während des Extrusionsvorganges bei der Herstellung des unvulkanisierten Laufstreifens, der verdrängten Kautschukmischung des Bereiches A des Laufstreifens mehr Volumen zur Verfügung steht, als wenn nur auf einer Seite ein Abstand D zwischen den Bereichen B und C des Laufstreifens vorhanden ist. Allerdings hat die Möglichkeit, daß auf einer Seite ein direkter Kontakt zwischen den Bereichen B und C des Laufstreifens besteht, den Vorteil, daß eine noch schnellere Ableitung elektrischer Ladungen erfolgen kann, wenn z. B. die Gummierung des Gürtelpaketes eine geringere Leitfähigkeit als der Bereich C aufweist und dann, bedingt durch die schnellere einseitige Ableitung, es auch möglich wird, aufgrund des vermehrten Ladungsflusses an dieser Seite des Reifens, z. B. an der zum Fahrzeug gerichteten Seitenwand, eine stärkere Schmutzanziehung zu bewirken. Das hat zur Folge, daß die gegenüberliegende Reifenseitenwand z. B. durch eine helle Gummimischung gestaltet ist, die weniger Schmutz aufgrund des verminderten Ladungsflusses anzieht.

Der Wert D ist prinzipiell abhängig von der Breite des Bereiches B , bezogen auf den Reifenquerschnitt, bzw. von der Reifengröße. Vorzugsweise weist der Abstand D einen Wert zwischen 3 und 5 mm auf. Dieser Abstand D ermöglicht einerseits eine extrusionstechnisch günstig herstellbare Laufstreifengestaltung bei gleichzeitig hoher Ableitfähigkeit elektrischer Ladungen. Der Transport der Ladungen erfolgt nur zu einem kleinen Teil in der gegebenenfalls weniger leitfähigen Gummierung des Gürtelpaketes, ehe eine schnellere Ableitung über den Bereich C des Laufstreifens erfolgen kann. Unter dem Begriff "Gürtelpaket" sollen verstärkende textile und/oder metallische Festigkeitsträger unter der Lauffläche eines Reifens, wie z. B. Bandage und/oder Gürtel verstanden werden.

Als günstig hat sich erwiesen, wenn die Bereiche B und C den gleichen spezifischen elektrischen Widerstand besitzen, wobei eine Abweichung von bis zu ca. 30 % zugelassen sein soll. Vorteilhafterweise weisen die Bereiche B und C des Laufstreifens die gleiche Mischungszusammensetzung auf. Es müssen dafür weniger Mischungen bereitgestellt werden. Prinzipiell ist es aber auch möglich, die Bereiche B und C mit unterschiedlichen Mischungen zu versehen, sofern sie einen ausreichend geringen spezifischen elektrischen Widerstand aufweisen.

Wenn der Bereich A des Laufstreifens eine Kieselsäure enthaltende Gummimischung ist, so können erfindungsgemäß qualitätsgesicherte Fahrzeugluftreifen hergestellt werden, die eine ausreichende elektrische Leitfähigkeit besitzen und gleichzeitig einen geringen Rollwiderstand und gute Naßrutscheigenschaften aufweisen.

Die Bereiche B und C des Laufstreifens sollen überwiegend Ruß enthalten. Es sind aber auch andere Mischungen denkbar, sofern sie einen spezifischen elektrischen Widerstand < 10⁸ Ω x cm aufweisen. Je geringer der spezifische elektrische Widerstand der Bereiche B und C ist, desto mehr Ladungen können aufgrund der hohen Potentialdifferenz zur Straßenoberfläche abgeleitet werden. Durch die Kombination der Bereiche A, B und C des erfindungsgemäßen Laufstreifens werden extrusionstechnisch vorteilhaft Fahrzeugluftreifen erzielt, die gute dämpfende Eigenschaften aufweisen (durch den Bereich C) und dabei gleichzeitig die erforderliche Leitfähigkeit des Reifens gewährleistet wird. Prinzipiell ist es auch möglich, die einzelnen Bereiche C mit unterschiedlichen Mischungen zu versehen. Die Mischungen werden sinnvollerweise in ihren dynamisch mechanischen Eigenschaften so eingestellt, daß gezielte asymmetrische mechanische Eigenschaften des Reifens selbst bei geometrisch symmetrischer Auslegung erreicht werden.

Der gesamte Bereich B des Laufsteifens soll an der mit der Fahrbahn in Berührung kommenden Fläche prinzipiell eine Breite von mindestens 1 mm bis maximal 30 % der gesamten mit der Fahrbahn in Berührung kommenden Breite einnehmen. Dadurch soll immer eine ausreichende Ableitfähigkeit gewährleistet sein und gleichzeitig durch geeignete Wahl des Abstandes D extrusionstechnische Vorteile erzielt werden.

Besonders vorteilhaft ist, wenn der Bereich B des Laufstreifens zumindest an einer Stelle im Mittelbereich bis in die mit der Fahrbahn in Berührung kommende Fläche des Laufstreifens reicht. Das hat den Vorteil, daß, obwohl sich die elektrisch leitende Fläche im Mittelbereich des Laufstreifens befindet, die Ladungsableitung von der Seitenwand (bzw. Wing) her erfolgen kann und somit eine schnelle und gesicherte Abführung der Ladung vom Fahrzeug zur Straßenoberfläche erzielt wird. Ein weiterer Vorteil einer im Mittelbereich der Bodenaufstandsfläche befindlichen leitfähigen Schicht (Bereich B) besteht darin, daß der Reifen auch bei wenig beladenem Fahrzeug durch eine leitende Fläche mit der Straßenoberfläche im Kontakt steht. Der Mittelbereich, der mit der Fahrbahn in Berührung kommenden Fläche eines Reifens soll - ausgehend vom Zenit - eine Ausdehnung in beiden axialen Richtungen des Reifens von bis zu 25 % der Gesamtbreite der mit der Fahrbahn in Berührung kommenden Fläche aufweisen.

Es ist aber auch möglich, daß der Bereich B im Mittelbereich des Laufstreifens und/oder im Schulterbereich die mit der Fahrbahn in Berührung kommenden Fläche des Laufstreifens durchdringt. Damit werden in der mit der Fahrbahn in Berührung kommenden Fläche mehrere leitfähige Stellen erzeugt, die in der Lage sind, die geforderte Ableitung an elektrostatischer Ladung zu gewährleisten. Der Schulterbereich schließt sich an den Mittelbereich der mit der Fahrbahn in Berührung kommenden Fläche des Laufstreifens an, so daß der Bereich B des Laufstreifens zumindest bis in die mit der Fahrbahn in Berührung kommende Fläche des Laufstreifens reicht. Es ist möglich, daß der Bereich B sich an einer oder an beiden Schultern befindet. Vorteilhafterweise soll sich an beiden Schultern der Bereich B befinden, um stets einen gesicherten Kontakt zur Straßenoberfläche herzustellen.

Es ist auch vorteilhaft, wenn der Bereich B des Laufstreifens im fertigen Reifen zumindest eine kompakte Profilklotzreihe bildet. Damit wäre der Vorteil verbunden, daß sich die Mischungstrennschicht (vom radial Inneren des Laufstreifens gesehen), nur bis zur Profilgrundnähe reicht, da solche Mischungstrennschichten immer in irgendeiner Weise Probleme, z. B. bezüglich der Haftung aneinander, mit sich bringen.

Weiterhin besteht die Möglichkeit, den Bereich B des Laufstreifens anders farblich zum Bereich A zu gestalten. Dies ist z. B. durch unterschiedlichen Rußgehalt bzw. -typ oder durch verschiedene Farbkörper möglich. Damit wird das Profildesign optisch unterstützt, was in den meisten Fällen vom Kunden erwünscht ist. Dieser Vorteil ist bezüglich der EP 718 127 A1 besonders hervorzuheben, da aufgrund des in dieser Anmeldung offenbarten Laufstreifenaufbau es nicht möglich war, eine Dicken- und Formschwankung an der Oberfläche des extrudierten Laufstreifens zu vermeiden, was zu unschönen ungleichmäßigen Farbverschiebungen führt.

Ein Ausführungbeispiel soll anhand einer schematischen Zeichnung näher erläutert werden.

Es zeigt:
- Fig. 1: einen radialen Schnitt durch einen Fahrzeugluftreifen mit einem erfindungsgemäßen Laufstreifenaufbau
- Fig. 2: einen radialen Teilschnitt durch einen Laufstreifen eines Fahrzeugluftreifens, wobei im Mittelbereich der mit der Fahrbahn in Berührung kommenden Fläche des Laufstreifens vom Bereich B an zwei Stellen eingenommen wird.
- Fig. 3: einen radialen Teilschnitt durch einen Laufstreifen eines Fahrzeugluftreifens, wobei der Bereich B einen kompakten Profilklotz bildet.

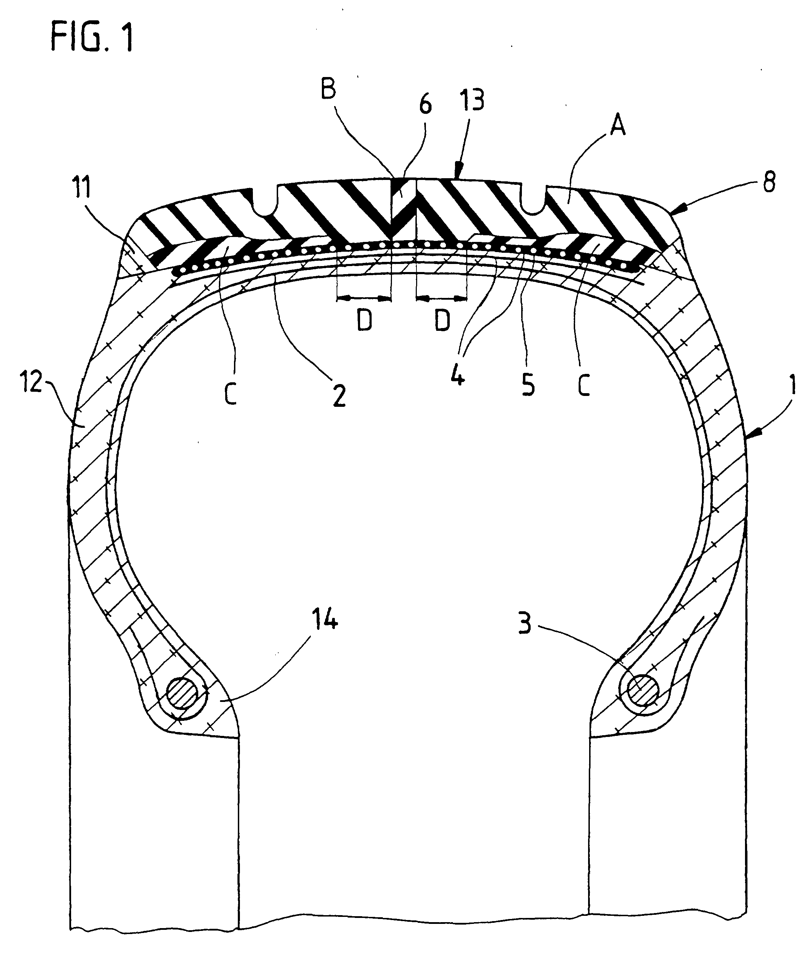

In der Figur 1 ist ein Fahrzeugluftreifen 1 mit einer Karkasse 2, die um die Wulstkerne 3 geschlagen ist und radial über der Karkasse 2 angeordneten gummierten Gürtel 4, der aus Festigkeitsträgern 5 aufgebaut ist, dargestellt. Über dem Gürtel 4 befindet sich ein Laufstreifen 8, der die Bereiche A, B und C aufweist. Dabei nimmt der Bereich A des Laufstreifens einen Anteil in radialer Richtung der gesamten Laufstreifendicke von ca. 60 % ein. Der Laufstreifen 8 weist an seinen radial äußeren Enden einen Wing (Flügel) auf. Der Wing 11 besitzt eine ähnliche Gummimischungszusammensetzung wie die angrenzenden Seitenwände 12. Eine mögliche Mischungszusammensetzung für die einzelnen Bereiche des Laufstreifens 8 ist in der Tabelle aufgelistet. Die Einheit pphr bezieht sich auf 100 Gewichtsteile Kautschuk. Da der spezifische elektrische Widerstand einer Gummimischung von vielen Herstellungsparametern (z. B. Mischstufenzahl oder wann der Ruß zugegeben wird) abhängt, können dazu nur ungefähre Angaben aufgeführt werden.

| **Bestandteil** | **Zusammensetzung (pphr)** | | | |
|---|---|---|---|---|
| | Laufstreifen | | Wing/Seitenw. | Bandagen-/Gürtelgummierg. |
| | Bereich A Bereich B, C | | | |
| Naturkautschuk | 10 | 10 | 70 | 100 |
| Butadienkautschuk | 30 | 30 | 30 | -- |
| Lös. SBR | 60 | 60 | -- | -- |
| Aktivruß | 10 | 70 | 55 | 60 |
| gefällte Kieselsäure | 70 | 10 | -- | 10 |
| Alterungsschutzmittel | 3 | 3 | 1,5 | 2 |
| Silan (TESPT) | 10 | -- | -- | -- |
| Zinkweiß | 3 | 3 | 5 | 8 |
| Stearinsäure | 3 | 3 | 2 | 1 |
| Schwefel | 1,5 | 1,5 | 2,5 | 4 |
| Beschleuniger | 3,5 | 3,5 | 1 | 1,5 |
| Kolophonium | -- | -- | 2 | -- |
| Schutzwachs | -- | -- | 2 | -- |
| Weichmacheröl | 20 | 20 | 3 | 6 |
| spezifischer elektrischer Widerstand (Ohm x cm) | > 10¹¹ | ca. 600 | ca. 10⁴ | ca. 10⁶ Ω cm |

In der Umgebung des Zenites 6 der mit der Fahrbahn in Berührung kommenden Fläche 13 des Laufstreifens 8 ist der Bereich B so gestaltet, daß er, ausgehend vom gummierten Gürtel 5 bis in die mit der Fahrbahn in Berührung kommende Fläche 13 des Laufstreifens 8, reicht. Über dem Abstand D von ca. 4 mm ist der Bereich B des Laufstreifens 8 vom Bereich C des Laufstreifens 8 beidseitig getrennt. Da der Bereich C in direktem Kontakt mit der Wing-Gummimischung 11 steht und diese eine hervorragende Leitfähigkeit besitzt (ca. 10⁴ Ω x cm), kann eine Ableitung der elektrostatischen Ladung, ausgehend von der nicht dargestellten Felge, auf die der Fahrzeugluftreifen 1 mit seinen Wülsten 14 montiert ist, über die elektrisch leitenden Seitenwände 12, den beiden Wings 11 bis in den Bereich C des Laufstreifens 8 erfolgen. Der durch den Abstand D gebildete Zwischenraum zwischen dem Bereich B und C erfolgt die Ladungsableitung über die Gummierung des Gürtels 5. Da der spezifische elektrische Widerstand der Gürtelgummierung bei ca. 10⁶ Ω x cm liegt, kann der Abstand D relativ weit gewählt werden, da die Gürtelgummierung diese Kontaktlücke zwischen den Bereichen B und C ausreichend kompensiert. Das Volumen des Abstandes D kann prinzipiell immer so gewählt werden, daß die verdrängte Kautschukmischung des Bereiches A durch den Bereich B im wesentlichen in diesem Zwischenraum Platz findet. Demzufolge spielt auch die Dicke des Bereiches A eine Rolle. In der Figur 1 soll diese ca. 5 - 8 mm betragen. Der Bereich B des Laufstreifens 8 bedeckt im Mittelbereich der mit der Fahrbahn in Berührung kommenden Fläche des Laufstreifens umlaufend z. B. ca. 2 bis 4 mm. Das hat den Vorteil, daß die guten Eigenschaften der Laufflächenmischung A nicht beeinflußt werden und dabei trotzdem die Leitfähigkeit erhöht wird und gleichzeitig sich verfahrenstechnische Vorteile bei der Herstellung des unvulkanisierten Laufstreifens ergeben.

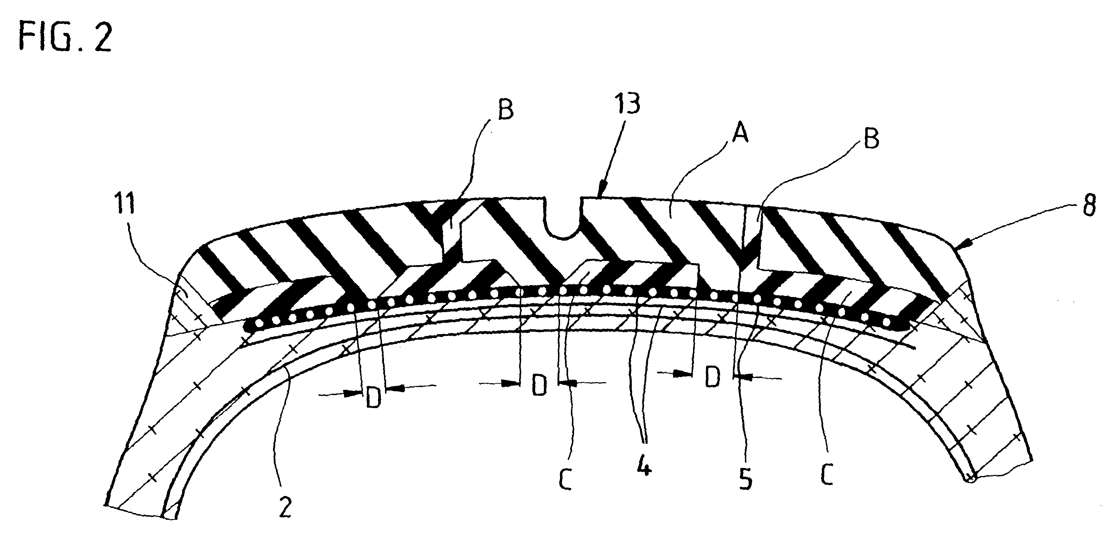

In der Figur 2 ist eine weitere Möglichkeit dargestellt. in welcher Art und Weise die Bereiche A, B und C des Laufstreifens 8 gestaltet sein können. Im Mittelbereich des Laufstreifens 8 sind in dessen mit der Fahrbahn in Berührung kommenden Fläche 13 zwei leitfähige Stellen, die durch den Bereich B des Laufstreifens 8 gebildet sind, eingebracht worden. Prinzipiell ist es natürlich möglich, daß noch an weiteren Stellen der Bereich B einen Teil der mit der Fahrbahn in Berührung kommenden Fläche 13 bildet. Die Figur 2 verdeutlicht, daß der Bereich B des Laufstreifens 8 verschiedenartig geformt sein kann. So kann einerseits die mit der Fahrbahn in Berührung kommende Fläche des Bereiches B eine größere Ausdehnung aufweisen als die Erstreckung, die mit der Gummierung des Gürtelpaktes in Kontakt steht. Mit dieser Ausführungsvariante wäre der Fahrbahnkontakt optimal gesichert. Andererseits ist es aber auch möglich, die Kontaktfläche zur Gürtelgummierung des Bereiches B größer zu gestalten als die mit der Fahrbahn in Berührung kommende Fläche des Bereiches B. In diesem Fall wäre ein schnellerer Ladungstransport zur Straßenoberfläche gewährleistet. Prinzipiell kann der Bereich B aber auch andere Formen aufweisen. Entscheidend bei der Gestaltung der Bereiche A, B, C des Laufstreifens ist aber auch der Abstand D, damit während der Herstellung des Laufstreifens extrusionstechnische Probleme optimiert werden können.

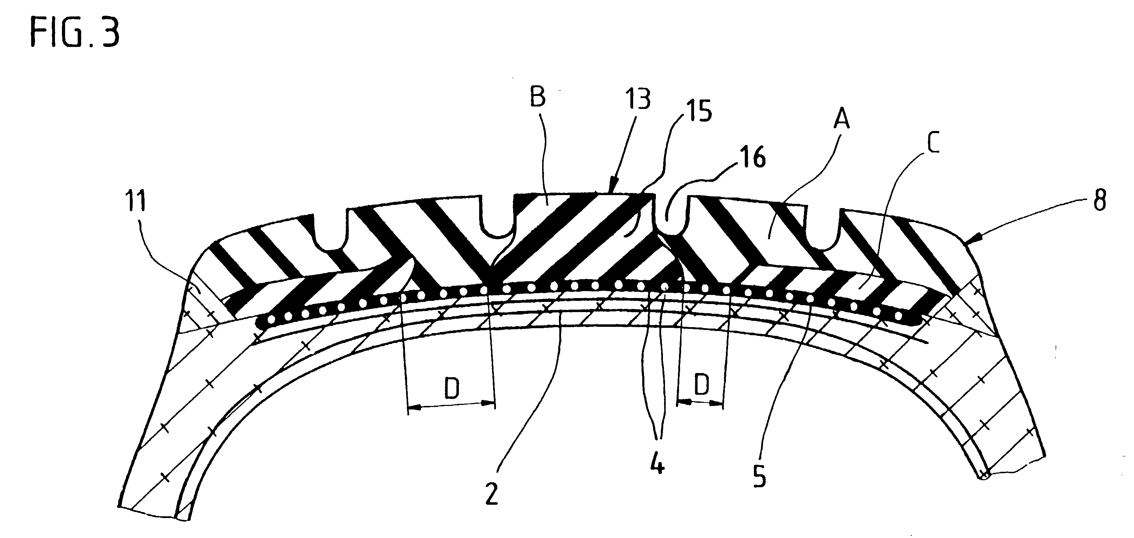

In der Figur 3 ist die Möglichkeit dargestellt, daß ein Profilklotz 15 des Laufstreifens 8 vollständig aus der Laufstreifenmischung des Bereiches B besteht. Der Profilklotz 15 befindet sich wiederum im Mittelbereich der mit der Fahrbahn in Berührung kommenden Fläche 13 des Laufstreifens 8 und wird von zwei umlaufenden Rillen begrenzt. Dabei ist es vorteilhaft, daß z. B. bei einem, wie in der Figur 3 dargestellten vier Längsrillen aufweisenden Profil der mittlere Profilklotz 15 aus der leitenden Laufstreifenmischung des Bereiches B besteht, um einen sicheren Kontakt bei jeder Beladung des Fahrzeuges zur Fahrbahnoberfläche zu erzielen. Prinzipiell ist es aber auch möglich, daß andere Profilklötze mit der Laufflächenmischung des Bereiches B ausgestattet sind. Denkbar ist aber z. B. auch, daß nur eine axiale Begrenzung des Bereiches B die Profilflanke eines Profilklotzes bildet. Zumindest soll aber nicht mehr als 30 % der mit der Fahrbahn in Berührung kommenden Fläche aus einer Gummimischung des Bereiches B bestehen, damit die Eigenschaften der Mischung des Bereiches A (guter Rollwiderstand, Naßrutschverhalten) des gesamten Reifens nicht verlorengehen.

Mit der vorliegenden Erfindung wird es möglich, durch die Aufteilung des Laufstreifens in verschiedene Bereiche, diesen Bereichen auch unterschiedliche Funktionen zuzuweisen. So weist der Bereich A einen hervorragenden Naßgriff sowie geringen Rollwiderstand auf. Der Bereich B eine hervorragende Leitfähigkeit und auch positive Eigenschaften im Abriebsverhalten und der Bereich C ist ebenfalls gut leitfähig und kann bezüglich des Rollwiderstandes optimiert werden. Durch den Abstand D zwischen den Bereichen B und C wird gleichzeitig die Herstellung des Fahrzeugluftreifens in der Art gesichert, daß Qualitätsschwankungen, die zu einem verschlechterten Fahrverhalten führen, ausgeschaltet werden können.

## Patentansprüche

1. Fahrzeugluftreifen (1) mit einer Karkasse (2), die vom Zenitbereich des Reifens bis in die Wulstbereiche reicht, weiterhin mit einem Laufstreifen (8) und einem zwischen Laufstreifen (8) und Karkasse (2) angeordneten gummierten Gürtelpaket (4),
**dadurch gekennzeichnet,**
**daß** die Gummierung des Gürtelpaketes (4) einen spezifischen elektrischen Widerstand <10⁸ Ω x cm aufweist, der Laufstreifen (8) aus zumindest 3 Bereichen aufgebaut ist, wobei die mit der Fahrbahn in Berührung kommende Fläche (13) des Laufstreifens (8) zu über der Hälfte von einem Bereich A des Laufstreifens (8) gebildet ist, dessen Gummimischung einen spezifischen elektrischen Widerstand >10¹⁰ Ω x cm aufweist und die in radialer Richtung mindestens 40 % der gesamten Laufstreifendicke umfaßt, und die übrige mit der Fahrbahn in Berührung kommende Fläche (13), zumindest teilweise, von einem Bereich B, dessen Gummimischung einen spezifischen elektrischen Widerstand < 10⁸ Ω x cm aufweist, eingenommen ist, wobei sich der Bereich B bis zum gummierten Gürtelpaket (4) erstreckt, und ein Bereich C des Laufstreifens (8), dessen Gummimischung sich unterhalb des Bereiches A des Laufstreifens (8) erstreckt und den wesentlichen Raum zwischen diesem und dem Gürtelpaket (4) ausfüllt und an beiden axialen Begrenzungen des Bereiches C zu den Seiten des Reifens mit zumindest einer weiteren Gummimischung in Kontakt steht, die einen spezifischen Widerstand < 10⁸ Ω x cm aufweist, wobei der Bereich B des Laufstreifens (8), bezogen auf den Reifenquerschnitt, zumindest auf einer Seite, einen Abstand D von 1 - 30 mm zum Bereich C des Laufstreifens (8) aufweist, wobei der Zwischenraum mit der Gummimischung des Bereiches A des Laufstreifens (8) ausgefüllt ist.

2. Fahrzeugluftreifen (1) nach Anspruch 1, **dadurch gekennzeichnet, daß** der Bereich B des Laufstreifens (8), bezogen auf den Reifenquerschnitt, auf beiden Seiten einen Abstand D von 1 - 30 mm zum Bereich C aufweist.

3. Fahrzeugluftreifen (1) nach Anspruch 1 oder 2, **dadurch gekennzeichnet, daß** der Abstand D 3 - 5 mm beträgt.

4. Fahrzeugluftreifen (1) nach zumindest einem der vorhergehenden Ansprüche, **dadurch gekennzeichnet, daß** die Gummimischungen der Bereiche B und C den gleichen spezifischen elektrischen Widerstand aufweisen.

5. Fahrzeugluftreifen (1) nach zumindest einem der vorhergehenden Ansprüche, **dadurch gekennzeichnet, daß** die Gummimischungen der Bereiche B und C die gleiche Zusammensetzung aufweisen.

6. Fahrzeugluftreifen (1) nach zumindest einem der vorhergehenden Ansprüche, **dadurch gekennzeichnet, daß** die Gummimischung des Bereiches A eine Kieselsäure enthaltende Gummimischung ist.

7. Fahrzeugluftreifen (1) nach zumindest einem der vorhergehenden Ansprüche, **dadurch gekennzeichnet, daß** die Gummimischungen der Bereiche B und C als Füllstoff überwiegend Ruß enthalten.

8. Fahrzeugluftreifen (1) nach zumindest einem der vorhergehenden Ansprüche, **dadurch gekennzeichnet, daß** der Bereich B des Laufstreifens (8) im Mittelbereich bis in die mit der Fahrbahn in Berührung kommende Fläche (13) des Laufstreifens (8) reicht.

9. Fahrzeugluftreifen (1) nach zumindest einem der vorhergehenden Ansprüche, **dadurch gekennzeichnet, daß** der Bereich B zumindest in einem Schulterbereich bis in die mit der Fahrbahn in Berührung kommende Fläche des Laufstreifens (13) reicht.

10. Fahrzeugluftreifen (1) nach zumindest einem der vorhergehenden Ansprüche, **dadurch gekennzeichnet, daß** zumindest eine Profilklotzreihe (15) des Laufstreifens (8) aus der Gummimischung des Bereiches B besteht.

11. Fahrzeugluftreifen (1) nach zumindest einem der vorhergehenden Ansprüche, **dadurch gekennzeichnet, daß** der Bereich B des Laufstreifens (8) im optischen Kontrast zum Bereich A des Laufstreifens (8) steht.

## Claims

1. Pneumatic vehicle tyre (1), having a carcase (2) which extends from the crown region of the tyre to the bead regions, as well as having a tread strip (8) and a rubber-coated belt bundle (4), which is disposed between tread strip (8) and carcase (2), **characterised in that** the rubber coating of the belt bundle (4) has a specific electrical resistance < 10⁸ Ω x cm, and the tread strip (8) is constructed from at least 3 regions, more than half of the surface (13) of the tread strip (8), which comes into contact with the roadway, being formed from a region A of the tread strip (8), the rubber mixture of which has a specific electrical resistance > 10¹⁰ Ω x cm, and which surface, when viewed with respect to the radial direction, includes at least 40 % of the entire tread strip thickness, and the remaining surface (13), which comes into contact with the roadway, being occupied, at least partially, by a region B, the rubber mixture of which has a specific electrical resistance < 10⁸ Ω x cm, the region B extending to the rubber-coated belt bundle (4), and a region C of the tread strip (8), the rubber mixture of which extends beneath the region A of the tread strip (8) and fills the substantial space between said strip and the belt bundle (4) and which is in contact with at least one additional rubber mixture, at both axial boundaries of the region C at the sides of the tyre, which additional mixture has a specific electrical resistance < 10⁸ Ω x cm, the region B of the tread strip (8), relative to the cross-section of the tyre, at least on one side, having a spacing D of 1 - 30 mm from the region C of the tread strip (8), and the intermediate space being filled with the rubber mixture of the region A of the tread strip (8).

2. Pneumatic vehicle tyre (1) according to claim 1, **characterised in that** the region B of the tread strip (8), relative to the cross-section of the tyre, has on both sides a spacing D of 1 - 30 mm from the region C.

3. Pneumatic vehicle tyre (1) according to claim 1 or 2, **characterised in that** the spacing D is 3 - 5 mm.

4. Pneumatic vehicle tyre (1) according to at least one of the preceding claims, **characterised in that** the rubber mixtures of the regions B and C have the same specific electrical resistance.

5. Pneumatic vehicle tyre (1) according to at least one of the preceding claims, **characterised in that** the rubber mixtures of the regions B and C have the same composition.

6. Pneumatic vehicle tyre (1) according to at least one of the preceding claims, **characterised in that** the rubber mixture of the region A is a rubber mixture containing silica.

7. Pneumatic vehicle tyre (1) according to at least one of the preceding claims, **characterised in that** the rubber mixtures of the regions B and C mainly contain carbon black as the filler.

8. Pneumatic vehicle tyre (1) according to at least one of the preceding claims, **characterised in that** the region B of the tread strip (8) in the central region extends to the surface (13) of the tread strip (8) which comes into contact with the roadway.

9. Pneumatic vehicle tyre (1) according to at least one of the preceding claims, **characterised in that** the region B, at least in a shoulder region, extends to the surface (13) of the tread strip which comes into contact with the roadway.

10. Pneumatic vehicle tyre (1) according to at least one of the preceding claims, **characterised in that** at least one row of profile blocks (15) of the tread strip (8) are formed from the rubber mixture of the region B.

11. Pneumatic vehicle tyre (1) according to at least one of the preceding claims, **characterised in that** the region B of the tread strip (8) is in visual contrast with the region A of the tread strip (8).

## Revendications

1. Pneumatique (1) de véhicule comprenant une carcasse (2) qui s'étend depuis la zone des nappes au sommet du pneu jusqu'aux zones du talon, comprenant en outre une bande de roulement (8) et un ensemble de ceintures (4) caoutchouté et disposé entre la bande de roulement (8) et la carcasse (2),
**caractérisé en ce que** le gommage de l'ensemble de ceintures (4) a une résistance électrique spécifique < 10⁸ Ω x cm, en ce que la bande de roulement (8) est constituée au moins de 3 zones, où la surface (13) de la bande de roulement (8) venant en contact avec la chaussée est constituée, sur plus de la moitié, d'une zone A de la bande de roulement (8) dont le mélange de caoutchouc a une résistance électrique spécifique > 10¹⁰ Ω x cm, lequel mélange de caoutchouc, dans le sens radial, comprend au moins 40 % de l'épaisseur totale de la bande de roulement et où la surface résiduelLe (13) venant en contact avec la chaussée est occupée, au moins partiellement, par une zone B dont le mélange de caoutchouc a une résistance électrique < 10⁸ Ω x cm, où la zone B s'étend jusqu'à l'ensemble de ceintures (4) caoutchouté et où une zone C de la bande de roulement (8) dont le mélange de caoutchouc s'étend au-dessous de la zone A de la bande de roulement (8) et qui remplit l'espace important entre cette zone et l'ensemble de ceintures (4) et qui, au niveau de deux limitations axiales de la zone C, par rapport aux côtés du pneu, est en contact avec au moins un autre mélange de caoutchouc qui a une résistance spécifique < 10⁸ Ω x cm, où la zone B de la bande de roulement (8) a par rapport à la section du pneu, au moins sur un côté, un espace D compris entre 1 mm et 30 mm par rapport à la zone C de la bande de roulement (8), où l'espace intermédiaire est rempli par le mélange de caoutchouc de la zone A de la bande de roulement (8).

2. Pneumatique (1) de véhicule selon la revendication 1,
**caractérisé en ce que** la zone B de la bande de roulement (8) a, par rapport à la section du pneu, un espace D compris entre 1 mm et 30 mm par rapport à la zone C, sur les deux côtés.

3. Pneumatique (1) de véhicule selon la revendication 1 ou 2, **caractérisé en ce que** l'espace D est compris entre 3 mm et 5 mm.

4. Pneumatique (1) de véhicule selon au moins l'une quelconque des revendications précédentes, **caractérisé en ce que** les mélanges de caoutchouc des zones B et C ont la même résistance électrique spécifique.

5. Pneumatique (1) de véhicule selon au moins l'une quelconque des revendications précédentes, **caractérisé en ce que** les mélanges de caoutchouc des zones B et C ont la même composition.

6. Pneumatique (1) de véhicule selon au moins l'une quelconque des revendications précédentes, **caractérisé en ce que** le mélange de caoutchouc de la zone A est un mélange de caoutchouc contenant un gel de silice.

7. Pneumatique (1) de véhicule selon au moins l'une quelconque des revendications précédentes, **caractérisé en ce que** les mélanges de caoutchouc des zones B et C contiennent principalement du noir de carbone servant de matière de remplissage.

8. Pneumatique (1) de véhicule selon au moins l'une quelconque des revendications précédentes, **caractérisé en ce que** la zone B de la bande de roulement (8), dans la zone centrale, s'étend jusqu'à la surface (13) de la bande de roulement (8) venant en contact avec la chaussée.

9. Pneumatique (1) de véhicule selon au moins l'une quelconque des revendications précédentes, **caractérisé en ce que** la zone B, au moins dans une zone d'épaulement, s'étend jusqu'à la surface (13) de la bande de roulement venant en contact avec la chaussée.

10. Pneumatique (1) de véhicule selon au moins l'une quelconque des revendications précédentes, **caractérisé en ce qu'**au moins un bloc à sculptures (15) de la bande de roulement (8) se compose du mélange de caoutchouc de la zone B.

11. Pneumatique (1) de véhicule selon au moins l'une quelconque des revendications précédentes, **caractérisé en ce que** la zone B de la bande de roulement (8) fait un contraste optique par rapport à la zone A de la bande de roulement (8).
